# EUROPEAN PATENT APPLICATION

(11) **EP 2 236 241 A1**
(43) Date of publication of application: **06.10.2010**
(21) Application number: 09157055.6
(22) Date of filing: 01.04.2009
(51) Int. Cl.: B23K 35/363, B23K 35/30, B23K 35/365, B23K 101/14, B23K 103/12, B23K 103/18

(54) **Process for brazing of aluminium parts and copper parts**

(71) Applicant: Solvay Fluor GmbH, 30173 Hannover (DE)
(72) Inventor: Born, Thomas, 31188 Holle (DE); Böse, Olaf, 13086 Berlin (DE); Ottmann, Alfred, 30629 Hannover (DE); Swidersky, Hans-Walter, 30175 Hannover (DE)
(74) Representative: Jacques, Philippe

(57) **Abstract**

Parts made of copper and parts made of aluminium can be brazed in the absence of solder metal when a flux is applied which contains at least 45 % by weight of cesium fluoroaluminate. If desired, the flux can be applied in the form of a flux composition containing the flux and other additives, e.g. binder, carrier, e.g. water, solvent, or surfactant.

## Description

The present invention concerns a process for brazing of parts made from aluminium or aluminium alloys and copper.

It is well known since decades that parts made from aluminium or aluminium alloys, for example, to produce heat exchangers, can be brazed using fluxes based on alkali metal fluoroaluminate. The flux can be applied dry to the parts to be brazed, e.g. assisted by electrostatic forces or by applying plasma. Alternatively, the flux can be applied according to the wet process, in form of a suspension in water or organic liquids, optionally in the presence of thickeners, binders or other additives. In the presence of a solder metal (filler metal) or a precursor thereof, e.g. silicon, or alkali metal fluorosilicate, a stable non-corrosive joint forms when the parts are assembled and heated to a temperature above the melting point of the flux and solder metal.

By means of a potassium fluoroaluminate flux, in the presence of a solder metal or a solder metal alloy, parts made from aluminium and copper can be brazed, see US-A 5,190,596; the use of potassium tetrafluoroborate also was disclosed, see US-A 3,855,682.

Object of the present invention is to provide an improved process for the brazing of parts made from copper or copper alloys and aluminium or aluminium alloys. This objective is achieved by the subject matter of the claims.

The present invention provides a process for brazing of parts from aluminium or aluminium alloys and parts made from copper or copper alloys in the absence of a solder metal applying a non-corrosive alkali metal fluoroaluminate flux which has a melting point lower than 548°C, preferably lower than 546°C. The flux is applied to at least a part of the surface of at least one of the parts to be joined, and the parts are heated and the parts to be joined are brazed. Thus, it is often not necessary to coat the joints to be brazed totally with the flux. It may be sufficient just to coat those areas which form the joint between the parts. It is even possible to apply the flux only to the contact area of one of the two parts intended to be joined by brazing; but it is preferred to coat both areas. Fluxes based on cesium fluoroaluminate are preferred. The term "based on" preferably means that at least 45 % by weight, preferably at least 50 % by weight are constituted by cesium fluoroaluminate. Preferably, the content of cesium fluoroaluminate is equal to or greater than 90 % by weight. The remainder to 100 % by is constituted preferably by potassium fluoroaluminate and/or lithium fluoroaluminate. The content of cesium fluoroaluminate is especially preferably essentially 100 % by weight. The flux containing cesium and potassium fluoroaluminate and/or lithium fluoroaluminate can be prepared by mechanically mixing cesium fluoroaluminate and the other fluoroaluminates, or by co-precipitation as described for example in US.-A 4,670,067.

If plural forms are used in the description of this invention, they are meant to include the singular form, and if singular forms are used, they are meant to include the plural.

The term "aluminium alloy" includes aluminium containing lower amounts of iron, manganese, magnesium and/or other alloying metals. In principle, any alloying metal might be comprised. The content of magnesium is preferably equal to or lower than 1 % by weight, preferably equal to or lower than 0.5 % by weight.

The term "copper alloys" denotes alloys based on copper which contain at least 45 % by weight of copper and include all types of brass and bronze. If in the following, the generic term "aluminium" is used, it is intended to include "aluminium alloys" unless otherwise specified. If in the following, the generic term "copper" is used, it is intended to include "copper alloys" unless otherwise specified. Here, the generic term "copper" preferably denotes essentially copper for use in or connected to refrigerators and heat exchangers, for example, phosphorous deoxidized copper comprising up to 0.2 % by weight of Co, as described in EP-A 1020538.

The term "cesium fluoroaluminate" includes those chemical compounds comprising or consisting of cesium, aluminium and fluorine. The term includes the hydrates of cesium fluoroaluminates. A flux consisting of cesium fluoroaluminate is especially preferred. Preferred cesium fluoroaluminates are CsAlF₄, Cs₂AlF₅, Cs₃AlF₆ , mechanical mixtures thereof, mixed complexes (adducts), e.g. CsAlF₄·Cs₂AlF₅, or hydrates. Beside cesium fluoroaluminate, the flux may contain other alkali metal fluoroaluminates, preferably potassium fluoroaluminate flux, e.g. KAlF₄, K₂AlF₅, their hydrates or mixtures of two or more of these potassium fluoroaluminates, provided that the melting point of the resulting mixture is equal to or lower than 548°C, preferably equal to or lower than 546°C.

The flux can be applied as such, consisting of fluoroaluminate or fluoroaluminates, without additives, as dry powder; for example, it can be applied electrostatically or by applying low temperature plasma, as described in WO 2006/100054. In this plasma process, finely divided flux powder is partially molten by a low temperature plasma beam and sprayed onto the surface of the aluminium part and copper parts to be joined.

In one embodiment, the flux is applied in the form of a flux composition. The flux composition comprises the flux as described above and additives which serve to improve the method of applying the flux mixture to the surface of the parts to be joined and/or to improve the properties of the parts coated with the respective flux, for example, the adhesion of the flux to the parts or the surface properties of the joined parts or the anti-corrosive properties. For example, non-corrosive additives, for example, potassium hexafluorotitanate, potassium hexafluorozirconate, or fluorides of cerium, niobium, lanthanum, bismuth, or yttrium, as described for example in WO2005/092563 or W02007/131993.

If the flux is not applied according to the dry fluxing method, it is applied according to the wet fluxing method. In the wet fluxing method, a flux composition is applied which contains the flux and further components. A flux composition for wet application which contains the flux mixture described above is another embodiment of the present invention. This flux composition (and thus also the method of brazing according to the present invention where the flux composition can be applied) will now be explained in detail.

According to one embodiment, the flux composition of the present invention suitable for the wet fluxing method contains the flux suspended in water, water-free organic liquids or aqueous organic liquids. Preferred liquids are those that have a boiling point at ambient pressure (1 bar abs) of equal to or lower than 350°C. The term "suspended in water" does not exclude that a part of the flux composition is dissolved in the liquid; this may be the case especially when water or aqueous organic liquids are contained. Liquids that are preferred are deionized water, mono-, di- or tribasic aliphatic alcohols, especially those with 1 to 4 carbon atoms, e.g. methanol, ethanol, isopropanol, or ethylene glycol, or glycol alkyl ethers, wherein alkyl preferably denotes linear or branched aliphatic C1 to C4 alkyl. Non-limiting examples are glycol monoalkyl ethers, e.g. 2-methoxyethanol or diethylene glycol, or glycol dialkylethers, for example, dimethyl glycol (dimethoxyethane). Mixtures comprising two or more of the liquids are also suited very well. Isopropanol or mixtures containing isopropanol are especially suitable.

In a preferred embodiment, the composition comprising the flux and in a liquid also contains additives which improve the flux composition properties.

In an especially preferred embodiment the flux is present in the form of a flux composition wherein the flux is suspended in a liquid which also contains a binder. Binders improve, for example, the adhesion of the flux mixture after their application on the parts to be brazed. Thus, the wet flux method using a flux composition comprising flux, binder and water, organic liquid or aqueous organic liquid is a preferred embodiment of the brazing process of the present invention. The liquid serves as solvent for some additives or as a carrier to disperse the flux or other insoluble components of the composition.

Suitable binders can be selected for example from the group consisting of organic polymers. These binders form a coating on aluminium parts or aluminium alloy parts when they are physically dried (i.e., they form a solid coating after the liquid is removed by evaporation), or when they are chemically dried (they form a solid coating e.g. under the influence of chemicals, e.g. oxygen or light which causes a cross linking of the molecules, or by a thermal treatment which provokes cross linking). Both mechanisms may occur simultaneously. Suitable polymers include polymers which are present in the composition in the form of a dispersion of solid particles dispersed in the liquid, and polymers which are present in the form of a solution dissolved in the liquid. Highly suitable binders are polyolefines, e.g. butyl rubbers, polyurethanes, resins, phthalates, polyacrylates, polymethacrylates, vinyl resins, epoxy resins, nitrocellulose, polyvinyl acetates or polyvinyl alcohols. Flux compositions containing water as a liquid and water-soluble or water-dispersed polymers, for example, polyvinylalcohol or polyurethane, are especially suitable because they have the advantage that, during the brazing process, water is evaporated instead of possibly flammable organic liquids.

The compositions may include other additives which improve the properties of the composition, for example, suspension stabilizers, surfactants, especially nonionic surfactants, e.g. Antarox BL 225, a mixture of linear C8 to C10 ethoxylated and propoxylated alcohols, thickeners, e.g. methyl butyl ether, thixotropic agents, e.g. gelatine or pectines, or a wax as described in EP-A 1808264.

The content of the flux in the total composition (including liquid or liquids, thixotropic agents, surfactants and binders, if present) generally is equal to or greater than 0.75 % by weight. Preferably, it is equal to or greater than 1 % by weight. More preferably, the flux mixture content in the composition is equal to or greater than 5 % by weight, very preferably, equal to or greater than 10 % by weight of the total flux composition.

Generally, the flux mixture content in the composition is equal to or lower than 70 % by weight. Preferably, it is equal to or lower than 50 % by weight.

The binder, if present, is generally contained in an amount of equal to or greater than 0.1 % by weight, preferably equal to or greater than 1 % by weight of the total flux composition. The binder, if present, is generally contained in an amount equal to or lower than 30 % by weight, preferably equal to or lower than 25 % by weight of the total composition.

The thixotropic agent, if present, is generally contained in an amount of equal to or greater than 1 % by weight of the total flux composition. Generally, if present, it is contained in an amount equal to or lower than 20 % by weight, preferably equal to or lower than 10 % by weight.

The thickener, if present, is generally contained in an amount of equal to or greater than 1 % by weight, preferably equal to or greater than 5 % by weight of the total flux composition. Generally, the thickener, if present, is contained in an amount equal to or lower than 15 % by weight, preferably equal to or lower than 10 % by weight of the total composition.

Highly suitable flux compositions for wet applications contain 10 to 70 % by weight of the flux, 1 to 25 % by weight binder, 0 to 15 % by weight of a thickener, 0 to 10 % by weight of a thixotropic agent, and 0 to 5 % by weight of other additives, e.g. a surfactant or a suspension stabilizer. Preferably, the reminder to 100 % by weight is water, an organic solvent or an aqueous organic solvent; water is especially preferred.

In another embodiment, the flux composition is free of any water or water-free or aqueous organic liquid, but contains the flux (and, if desired, additives, e.g. surfactants, thickener or thixotropic agents) as described above, and a water-soluble organic polymer as a binder which is present in the form of a water soluble package for the flux. For example, polyvinyl alcohol is very suitable as water-soluble package for the flux as described in US patent application publication 2006/0231162. Such packages can be handled without dust formation, and after addition of water or aqueous organic solvents, they form a suspension of the flux in water while the water soluble polymer dissolves and provides the binder function.

The suspension can be applied in a known manner, e.g. by spraying, painting, or by dipping the parts to be joined into the suspension.

If desired, parts coated with the flux composition can be dried before brazing and then later be brazed, or drying and brazing can be performed immediately after one another.

The weight per area of the flux is preferably equal to or higher than 5 g/m². More preferably, it is equal to or higher than 10 g/m². Preferably, it is equal to or lower than 40 g/m².

The parts to be brazed are assembled. Then, they are brazed in a suitable apparatus, e.g. a brazing oven, usually under inert gas, e.g. nitrogen, argon or mixtures thereof; by heating them to a temperature high enough so that the flux melts and the assembled parts are joined. If desired, heat can be provided by a torch or by a laser beam.

Often, brazing is performed at a temperature equal to or lower than 585°C, preferably equal to or lower than 580°C, more preferably equal to or lower than 570°C. Especially preferably, the temperature at brazing is equal to or lower than 560°C, and most preferably equal to or lower than 555°C. The temperature must be at least as high as the melting point of the respective flux. Preferably, the temperature at brazing is equal to or higher than 547°C. A highly preferred range for brazing is 500 to 550°C. It has to be noted that the brazing temperature can be higher than the preferred limit of 585°C. But the higher the temperature, the more caution must be given to the possible, undesired formation of the alloy of copper and aluminium. To prevent undesired excess formation of the alloy (which is needed to form the joint), the brazed parts must be brought to a temperature preferably lower than the melting point of the Al-Cu eutectic. This melting point is reported to be 548°C (sometimes, it is reported to be 547°C). Consequently, the brazed parts are preferably brought to a temperature equal to or lower than 548°C, especially preferably equal to or lower than 547°C where formation of the alloy stops.

During brazing, an alloy forms from aluminium or the aluminium alloy and copper. The formed alloy has a melting point - about 547°C or 548°C which temperature may be influenced by alloyed metals in the aluminium or copper, if present - considerably lower than that of the aluminium (or aluminium alloys) and copper. A relatively fast diffusion of copper in aluminium and aluminium in copper, respectively, causes a fast expansion of the low-melting alloy from copper and aluminium. Thus, it is preferred to perform brazing quickly and, if necessary, to cool the joined parts to a temperature low enough after brazing such that after the parts are desirably joined, no further alloy of aluminium and copper forms.

The process of the present invention can, for example, also be applied to braze copper and aluminium-magnesium alloys.

With the process of the present invention, for example, copper tubes can be joined to aluminium or aluminium alloy parts, e.g. to aluminium tubes or compressors with aluminium housings, or copper plates can be joined with aluminium plates, for example, for electronic circuits.

One advantage of the process of the present invention is that no solder metal or solder metal precursor is needed for brazing. Thus, the step of plating one of the parts or the parts to be brazed with solder metal or applying solder metal to the parts is obviated.

Another advantage of the process is the relatively low brazing temperature which is possible when using fluxes with a relatively low melting point. Applying a relatively low brazing temperature (below 580°C) causes lower erosion of the joined parts. As described above, an alloy forms from aluminium and copper with a melting point of about 547°C or about 548°C. If brazing is performed at a too high temperature, the joined work pieces erode more and more because more and more alloy forms. The use of a low-melting brazing flux prevents erosion of the joined parts, especially if the use of a low melting brazing flux is combined with the sufficiently quick lowering of the temperature of the joined pieces after brazing, as described above to stop the formation of the alloy between aluminium and copper.

Another subject of the present invention concerns copper parts at least partially coated by a flux containing equal to or more than 45 % by weight, preferably equal to or more than 50 % by weight of cesium fluoroaluminate, the remainder being potassium fluoroaluminate and/or lithium fluoroaluminate. If lithium fluoroaluminate is present, its content is preferably equal to or less than 15 % by weight of the total flux set as 100% by weight.

The weight per area of the flux is 5 to 40 g/m².

Still another subject of the present invention concerns copper parts at least partially coated by a flux composition described above which preferably contains 10 to 70 % by weight of a flux, 1 to 25 % by weight binder, 0 to 15 % by weight of a thickener, 0 to 10 % by weight of a thixotropic agent, and 0 to 5 % by weight of other additives, e.g. a surfactant or a suspension stabilizer; with the proviso that the flux contains, relative to the total weight of the flux composed of cesium and potassium and/or lithium fluoroaluminate set as 100 % by weight, equal to or more than 45 % by weight, preferably equal to or more than 50 % by weight of cesium fluoroaluminate, the remainder being potassium fluoroaluminate and/or lithium fluoroaluminate. Preferably, the reminder to 100 % by weight is water, an organic solvent or an aqueous organic solvent; water is especially preferred. The weight per area of the flux is 5 to 40 g/m². The copper parts of the invention are free of added solder.

The use of cesium fluoroaluminate for solderfree brazing parts of copper and parts of aluminium is another subject of the present invention.

The invention will now be further explained in the examples without the intention to limit it.

### Example 1 : Brazing of parts of copper and aluminium at 566°C

Essentially pure cesium fluoroaluminate (purchased from Chemetall, Langelsheim, Germany) as flux was spread with a spatula on a plate essentially consisting of copper such that the weight per area of the cesium fluoroaluminate was estimated to be about 30 g/m². An aluminium angle made from 99.5 % by weight of aluminium was placed on the area of the copper plate coated with the flux. The assembly was brought into a brazing oven with a nitrogen atmosphere. The oven was heated up to about 566°C in a speed of about 30°C/minute. As soon as the flux had melted and brazing had occurred, the brazed parts were taken out of the oven and cooled below about 540°C.

The joined parts showed only low signs of erosion of the aluminium angle due to excess Cu/A1 alloy formation.

### Example 2 : Brazing at a temperature slightly above the melting point of the Al-Cu eutectic

Example 1 was repeated. This time, the temperature of the oven was adjusted to about 545°C. It was assumed that the temperature in the oven rose to a temperature slightly above the melting point of the Al-Cu eutectic. Again, the joined parts were removed from the oven and cooled as soon as melting of the flux was observed and the brazing had occurred. The erosion of the aluminium angle was still more limited than in example 1.

### Example 3 (Comparison example): Brazing at 595°C with potassium fluoroaluminate flux

Example 1 was repeated, but potassium fluoroaluminate (a mixture of KAlF₄/K₂AlF₅) was used as flux. The temperature in the oven was brought to 595°C. Though the parts were completely brazed, but remarkable erosion could be observed on the aluminium angle.

### Example 4 : Brazing using a cesium fluoroaluminate/potassium fluoroaluminate mixture

Cesium fluoroaluminate and potassium fluoroaluminate (the latter available under the tradename Nocolok®) are mechanically mixed in weight ratio of 85:15. The resultant mixture is spread with a spatula on a copper plate such that the weight per area is estimated to be about 30 g/m², and an aluminium angle of 99.5 % by weight Al is placed on the coated copper plate. The assembly is brought into the oven like in example 1, and brazing is performed in nitrogen atmosphere at a temperature of about 560°C. As soon as brazing has occurred, the joined parts are removed from the oven and cooled.

### Example 5 : Brazing of copper and aluminium using a flux composition

A flux composition is prepared by producing, in a mixer, a slurry of 20 g of cesium fluoroaluminate, 10 g of polyacrylate as binder, the remainder to 100 g being deionized water. The slurry is then sprayed on a copper plate to achieve a flux weight per area of about 30 g/m², and the coated copper plate is dried at about 60°C. Then, the aluminium angle is placed on the coated side of the copper plate, and as in example 1, the assembled parts are brazed.

### Example 6 : Brazing of copper using flux compositions

Example 5 is successfully repeated with other water soluble or water insoluble binders, e.g. polyvinyl alcohol, butyl rubber, hydroxymethyl cellulose and polyurethane.

It has to be noted that optimizations can be expected by applying coatings with optimized weight per area of the flux and by optimizing the speed of heating, for example.

## Claims

1. A process for brazing parts of copper or copper alloys and parts of aluminium or aluminium alloys in the absence of a solder metal wherein a flux is applied to at least a part of the surface of at least one of the parts to be joined, and the parts are heated and the parts to be joined are brazed, with the proviso that a non-corrosive alkali metal fluoroaluminate flux with a melting point equal to or lower than 548°C is used.

2. The process of claim 1 wherein the alkali metal fluoroaluminate is based on cesium fluoroaluminate, optionally admixed with potassium fluoroaluminate and /or lithium fluoroaluminate.

3. The process of claim 2 wherein the content of cesium fluoroaluminate in the flux is equal to or greater than 90 % by weight.

4. The process of claim 1 wherein brazing is performed at a temperature equal to or lower than 585°C.

5. The process of claim 4 wherein brazing is performed at a temperature equal to or lower than 570°C.

6. The process of claim 4 wherein brazing is performed at a temperature equal to or lower than 550°C.

7. The process of claim 1 wherein the temperature of the joined parts after brazing is reduced such that the formation of further alloy of aluminium and copper after brazing is essentially stopped.

8. The process of claim 7 wherein the joined parts are cooled to a temperature below 548°C.

9. The process of claim 1 wherein the flux is applied in the form of a flux composition which contains additives.

10. The process of claim 9 wherein the additive or additives are selected from the group consisting of binders, thickeners, solvents, liquid carriers, surfactants, thixotropic agents, and anti-corrosive additives.

11. The process according to claim 1 wherein the flux is applied as dry flux.

12. A solderfree copper part for brazing with aluminium, coated with a flux containing 45 % by weight or more of cesium fluoroaluminate, the remainder being potassium fluoroaluminate and/or lithium fluoroaluminate.

13. The solderfree copper part of claim 11 wherein the flux is present in a flux composition containing the flux and additives.

14. Use of cesium fluoroaluminate for solderfree brazing of copper parts and aluminium parts.
